# EUROPÄISCHE PATENTANMELDUNG

(11) **EP 0 896 977 A1**
(43) Veröffentlichungstag der Anmeldung: **17.02.1999**
(21) Anmeldenummer: 98114887.7
(22) Anmeldetag: 07.08.1998
(51) Int. Cl.: C08J 11/08, C08L 81/02

(54) **Verfahren zur Herstellung von Polymerblends durch Recyclisierung von Hochleistungspolymeren**

(30) Priorität: 12.08.1997 DE 19734850
(71) Anmelder: Ticona GmbH, 65451 Kelsterbach (DE)
(72) Erfinder: Brück, Martin Dl., 61276 Weilrod (DE); Disch, Stefan, Dr., 60599 Frankfurt (DE); Kohlhepp, Klaus, 65817 Eppstein (DE)

(57) **Zusammenfassung**

Die Erfindung betrifft ein Verfahren zur Herstellung von Blends aus Hochleistungspolymeren. Die Besonderheiten sind, daß mindestens zwei sortenreine Polymere mit einem Lösungsmittel oder einem Lösungsmittelgemisch, in dem die eingesetzten Polymere löslich sind, behandelt werden, daß die Polymere dabei gelöst und anschließend in einem flüssigen Medium ausgefällt werden und daß als polymere Bestandteile jeweils Recyclat eingesetzt wird.

## Beschreibung

Die Erfindung betrifft ein Verfahren zur Herstellung von Polymerblends aus Altmaterial, wobei Hochleistungspolymere eingesetzt werden.

Polyarylensulfide (PAS) und ihre Herstellung sind bekannt (US-A 3,354,129). Bei ihrer Herstellung werden PAS aus der Reaktionsmischung nach herkömmlichen Verfahren isoliert.

Hochleistungspolymere können als Altmaterial erneut aufgeschmolzen und als Regranulat dem Spritzguß wieder zugeführt werden. Es ist aber bekannt, daß es hierbei zu einer Reduzierung der Produkteigenschaften kommt. So wird z.B. in der DE-A-3433978 zum Stand der Technik angeführt, daß durch wiederholte thermische Belastung von PAS eine Unter- bzw. Übervernetzung eintritt, die bei linearen PAS-Ausgangsmaterialien zu einer Verschlechterung der fließ- und der zähelastischen Eigenschaften führt.

Ein Verfahren zur Recyclisierung - also Wiedergewinnung - von PAS ist bekannt (DE-A-44 36 636). Bei diesem Verfahren wird Polyarylensulfid enthaltendes Material, d.h. sogenanntes Recyclat z.B. aus Abfällen oder zur Wiederverwendung vorgesehenes Material, mit einem Lösungsmittel behandelt, das Polymer dabei gelöst, die Lösung filtriert, um gegebenenfalls vorhandene unlösliche Bestandteile abzutrennen und in einem flüssigen Medium ausgefällt.
Das bei diesem Verfahren gewonnene PAS ist in seinen Eigenschaften mit einem noch nicht verarbeiteten neuen PAS-Material zumindest identisch z.T. sogar verbessert. Durch den Ausfällprozeß bedingt enthält das auf diesem Wege erhaltene PAS-Material im allgemeinen eine geringere Menge niedermolekularer Verunreinigungen als das als Ausgangsmaterial verwendete Material. Das bekannte Verfahren bezieht sich jedoch nur auf PAS als einzige Komponente und nicht auf Gemische mit anderen Polymeren.

Eine Mischung von zwei oder mehr Polymeren, die im allgemeinen thermoplastisch verformt wird wird als Polymerblend bezeichnet. In der Technik werden solche Polymerblends meistens durch Mischen der Polymerkomponenten und anschließendes Aufschmelzen, z.B. in einem Kneter bzw. Extruder, hergestellt (siehe z.B. S. Akhtar, J. L. White, Polymer Engineering and Science, Vol. 31, p. 84-91, 1991). Diese Herstellungsmethode von Polymerblends hat den Nachteil, daß alle in den Ausgangsstoffen enthaltenen Verunreinigungen und sonstigen Inhaltsstoffe im entstehenden Blend verbleiben. Darüberhinaus besteht die Möglichkeit, daß die Polymermoleküle durch die hohe Scherung im Extruder geschädigt werden. Beim Blending durch Extrusion muß bei einer Temperatur gearbeitet werden, die oberhalb der Schmelztemperatur des höherschmelzenden Polymeren liegt. Bei dieser Temperatur kann aber das eine oder andere Polymer thermisch abgebaut werden. Außerdem können bei diesem Verfahren die Eigenschaften des Polymer Blends nur unzureichend eingestellt werden.

Ein Polymerblend kann aber auch über einen Lösungs- und Ausfällvorgang hergestellt werden, wobei der oben angeführte thermische Abbau von den Blendkomponenten vermieden werden kann.

Bekannt sind Blends aus PAS und einem thermoplastischen Polyether aus Bisphenol A und Epichlorhydrin, die aus einer Lösung der beiden Polymere hergestellt werden (JP 02-222449-A). Die erhaltene harzartige Komponente wird mit anderen thermoplastischen Harzen wie Polyphenylensulfid (PPS) und/oder Polyphenylenoxid (PPO), Polyethersulfon (PES), Polyetherketon (PEK), Polyamid (PA) und weiteren extrudiert und zu Formteilen verarbeitet. Durch die Gegenwart des Blendanteils in der Mischung werden die mechanischen Eigenschaften der erhaltenen Formteile erhöht, z.B. die Kerbschlag- und Zugfestigkeit. Das Blend dient also zur Erhöhung der Phasenmischbarkeit einer Polymermischung. Eine Wiedergewinnung wird nicht erwähnt.

Die separate Herstellung eines "Vorblends", wie eben geschildert, kann vermieden werden, wenn man PAS und Phenoxyharze und/oder weitere thermoplastische Harze wie PA, PPO, PEK und andere in Gegenwart einer organischen Silanverbindung in einem organischen Lösungsmittel löst und anschließend in festem Zustand ausfällt (JP 04-132 766A). Die erhaltene Mischung wird aufgeschmolzen, pelletisiert und zu Formteilen mit excellenter Hitze-, Flamm- und chemischer Beständigkeit, Dimensionsstabilität und Verarbeitbarkeit umgewandelt, die auch eine erhöhte mechanische Beständigkeit aufweisen. Die Vorteile werden durch die Gegenwart der als Phasenvermittler wirkenden Silane erzielt. Auch hier wird der Lösevorgang nicht zur Wiedergewinnung von Altmaterial eingesetzt.

Allen bekannten Verfahren ist aber gemeinsam, daß sogenanntes Neumaterial der Polymeren eingesetzt wird, was den Preis der Endprodukte erheblich beeinflußt.

Aufgabe der Erfindung war es, Nachteile der oben angeführten Verfahren zu vermeiden und wirtschaftliche Verfahren für die Herstellung von Blends zu entwickeln.

Die Erfindung betrifft ein Verfahren zur Herstellung von Blends aus Hochleistungspolymeren, bei dem mindestens zwei sortenreine Polymere mit einem Lösungsmittel oder einem Lösungsmittelgemisch, in dem die eingesetzten Polymere löslich sind, behandelt werden, die Polymere dabei gelöst und anschließend in einem flüssigen Medium ausgefällt werden, wobei als polymere Bestandteile jeweils Recyclat eingesetzt wird.

Es ist auch möglich, anstelle der sortenreinen Polymere ein Blend bekannter Zusammensetzung bei dem Verfahren gemäß der Erfindung einzusetzen.

Die Erfindung betrifft ferner die Verwendung der nach dem Verfahren wiedergewonnenen Polymer-Blends als technische Kunststoffe zur Herstellung von Formteilen.

Polymerblends werden im allgemeinen dann verwendet, wenn die Eigenschaften der einzelnen Hochleistungspolymeren für bestimmte Einsatzgebiete nicht ausreichen. So verbessert sich beispielsweise die Stoßfestigkeit und Elastizität von PPS durch Mischen mit z.B. PES, wobei die guten Eigenschaften des PPS, wie hohe Hitzebeständigkeit, chemische Beständigkeit und Flammwidrigkeit erhalten bleiben. Aus diesem Grund können derartige Polymerblends durch Verformung, z.B. Sprühen, Pressen, Spritzen und Ziehen zur Herstellung von Formteilen eingesetzt werden, die beispielsweise im Automobilbau, Elektronik- und Elektroindustrie Verwendung finden. Beispiele hierfür sind Wärmetauscher, Pumpen und Isolationsmaterial.

Es war überraschend, daß es technisch möglich ist, die genannten Vorteile der Polymerblends auch mit Recyclat-Material zu erhalten und die Blends für die bekannten Anwendungsgebiete ohne Qualitätsverluste einzusetzen.

Als Polymere, die bei dem Verfahren gemäß der Erfindung eingesetzt werden, eignen sich z.B. PAS, Polyetherketon, Polyetheretherketon (PEEK), Polyetherimid (PEI), Polyphenylenoxid (PPO), Polycarbonat (PC), Cycloolefincopolymer (COC), und Polyethersulfon (PES). Vorzugsweise enthält das Blend stets PAS als Blendpartner. Diese Polymere werden in Form von Recyclat eingesetzt, d.h. Altmaterial wie Abfälle aus der Verarbeitung der Polymeren, ferner Polymer-Material, das zur Wiedergewinnung gesammelt wurde, beispielsweise gebrauchte Teile aus nicht mehr funktionsfähigen Geräten, Pulver, Granulat, Verformungsabfall und sonstige verarbeiteten Polymer-Formteilen. Das Recyclat kann unverschnittenes Polymer oder mit Füll- und/oder Verstärkungsmitteln verschnittenes Polymer darstellen.

Alle genannten Polymere können aus ihren Lösungen ohne Verlust ihrer Materialeigenschaften wiedergewonnen werden, in vielen Fällen sind die Eigenschaften sogar verbessert, was mit der Reinheit der wiedergewonnenen Verbindungen zusammenhängt. Somit ist das Verfahren gemäß der Erfindung vorteilhaft für den Einsatz von Recyclat, d.h. von zur Wiederverwendung vorgesehenem Material. Ebenso vorteilhaft ist es, daß auch die genannten wertvollen Eigenschaften bei der Wiedergewinnung erhalten werden, wenn ein Gemisch von Polymeren vorliegt. Um in diesem Fall das exakte Verhältnis der Polymeren zueinander in den wiedergewonnenen Gemisch zu ermitteln, ist es notwendig, sortenreines Recyclat der einzelnen Polymeren einzusetzen. Es ist auch möglich, das Recyclat eines Blends bekannter Zusammensetzung zu verwenden, wobei nur die löslichen Komponenten wiedergewonnen werden.

Nach dem Verfahren gemäß der vorliegenden Erfindung wird das Altmaterial, das z.B. PAS und die weiteren zu recyclierenden Polymerkomponenten enthält, in einem hochsiedenden, organischen Lösungsmittel oder einem Lösungsmittelgemisch suspendiert. Beim Erhitzen lösen sich die Polymere aus dem Altmaterial heraus. Durch Filtration werden unlösliche Bestandteile abgetrennt. Die Polymerlösung wird in ein Nichtlösungsmittel eingebracht, wobei die Polymere als Blend ausfallen. Das Polymerblend wird abgesaugt und getrocknet.

Unter einem flüssigen Medium ist Wasser oder ein organisches Lösungsmittel zu verstehen, in dem einerseits die Polymere unlöslich sind, das aber andererseits niedrig molekulare Oligomere und andere Verunreinigungen löst. Hierzu eignen sich beispielsweise Aceton, Ethanol, Isopropanol, Tetrahydrofuran (THF) und Toluol.

Die Polymere werden im allgemeinen entweder als unverschnittenes Material eingesetzt oder liegen mit Füllstoffen wie Glasfasern und Mineralstoffen versetzt vor. Wird bei dem Verfahren gemäß der Erfindung mit Füllstoffen versehenes Polymer-Material eingesetzt, werden diese nichtlöslichen, im allgemeinen anorganischen Bestandteile nach dem Löseprozeß durch Filtration abgeschieden. Wenn sich in dem Polymer-Material noch andere Stoffe befinden, die bei dem Lösevorgang nicht gelöst werden, können diese ebenfalls durch Filtration entfernt werden.

Im Anschluß an den Lösevorgang und gegebenenfalls nach einer zusätzlichen Filtration werden die in der Lösung befindlichen Polymere durch Aus- bzw. Umfällung in einem flüssigen Medium erhalten. Das flüssige Medium wird im Verhältnis von 1:1 bis 1:100, vorzugsweise 1:10 bis 1:15 als Überschuß, bezogen auf jedes eingesetzte Polymer (als Feststoff) vorgelegt und die Polymerlösung in das flüssige Medium z.B. unter starkem Rühren eingebracht. Im Anschluß an die Ausfällung erfolgt ein ein- oder mehrstufiger Waschprozeß mit frischem flüssigen Medium und anschließendem Trocknen.

Lösungsmittel, die im Verfahren gemäß der Erfindung eingesetzt werden, sind im allgemeinen hochsiedend und weisen Siedepunkte bis 400°C auf. Beispielsweise sind dies ein- oder mehrkernige organische Verbindungen mit 6 bis 25 C-Atomen, die unsubstituiert oder mit Halogen, vorzugsweise Chlor oder Brom, Alkoxygruppen mit 1 bis 4 C-Atomen im Alkylrest oder Arylgruppen substituiert sind. Diese Verbindungen können auch phenolische OH-Gruppen tragen. Geeignete Lösungsmittel sind beispielsweise Chlorbenzol,1-Chlor- und 1-Bromnaphthalin, Benzophenon und N-Methylpyrrolidon(NMP) oder Gemische davon.

Die als Recyclat eingesetzten Materialien werden bei Temperaturen von 150°C bis 360°C, vorzugsweise 180°C bis 260°C mit den Lösungsmitteln behandelt, wobei die Lösung stattfindet. Die erhaltene Lösung ist niedrigviskos. Im allgemeinen wird bei Normaldruck gearbeitet. Das Lösen des Polymer-Materials kann jedoch auch unter erhöhtem Druck stattfinden. Bei letzterer Verfahrensweise kann auf die Umfällung verzichtet werden, wenn die Lösung über eine Düse, beispielsweise in einen beheizten Sprühturm entspannt wird, wobei ein feinkörniges Polymer-Pulver anfällt. Enthält die Lösung feste Bestandteile, können diese durch eine Filtration vor der Sprühtrocknung entfernt werden. Wird unter Druck gearbeitet und die Lösung in einen beheizten Sprühturm, der unter vermindertem Druck steht, eingegeben, kann das Lösungsmittel über Kopf entnommen und kondensiert werden. Die Wärmekapazität der Lösung ist ausreichend, um beispielsweise Chlorbenzol vollständig zu verdampfen, so daß eine zusätzliche Trocknung nur noch bedingt erforderlich ist.

Wird die unter erhöhtem Druck stehende Polymerlösung in ein flüssiges Medium hinein spontan entspannt, werden beispielsweise faserige Aggregate erhalten. Außerdem bewirkt diese Methode einen zusätzlichen Reinigungseffekt gegenüber der Sprühtrocknung.

Beim Filtrationsprozeß werden aus dem Altmaterial Inhaltsstoffe wie Glasfasern und Mineralstoffe, durch Umwelteinflüsse geschädigte Anteile und alterungsbedingt unlösliche Bestandteile abgetrennt. Durch den Ausfällprozeß werden darüberhinaus solche löslichen Verunreinigungen abgetrennt, die nicht wieder ausgefällt werden, so daß die Polymere aus Altmaterial eine Reinheit besitzen, die der von neuwertigem Polymermaterial gleichkommt oder diese übertrifft.

Durch Variation der Prozeßparameter läßt sich sowohl die mikroskopische als auch die makroskopische Beschaffenheit der beim Ausfällen erhaltenen Teilchen beeinflussen. Unter makroskopischer Beschaffenheit wird die Geometrie der Teilchen verstanden. Die ausgefällten Teilchen besitzen eine Größe von 100 nm bis 10 mm.

Beispielsweise werden durch das beschriebene Eintropfen der Polymerlösung unter starkem Rühren flockige Gebilde erhalten. Wird dagegen die Lösung in ein stehendes d.h. nicht bewegtes Medium eingetropft, resultiert eine kugelförmige Geometrie. Die Größe der Partikel läßt sich durch die Konzentration der Polymerlösung beeinflussen. So werden beispielsweise bei höherer Konzentration größere Partikel erhalten. Darüberhinaus kann die Partikelgröße durch Variation des Ausfällmediums und der Temperatur eingestellt werden.

Von der Geometrie der ausgefällten Teilchen ist die mikroskopische Beschaffenheit des Polymerblends grundsätzlich zu unterscheiden. Die Polymerkomponenten liegen in einem Blend im allgemeinen phasensepariert vor, d.h. die einzelnen Polymere liegen mikroskopisch räumlich getrennt vor. Die Anordnung dieser phasenseparierten Bereiche wird als Morphologie bezeichnet. Im allgemeinen wird bei Polymerblends zwischen einer kontinuierlichen und einer diskontinuierlichen Phase unterschieden. Letztere wird von dem Blendpartner gebildet, der im Unterschuß enthalten ist und besitzt im allgemeinen eine Dimension von 1 nm bis 50 µm.
Diese Morphologie kann bei Polymer Blends, die auf herkömmlichem Wege durch Extrusion hergestellt werden, nur in engen Grenzen durch Veränderung der Extrusionstemperatur oder der Blendzusammensetzung variiert werden. Dies ist ein Nachteil der herkömmlichen Verfahren, da die für die Anwendung wesentlichen mechanischen Eigenschaften sehr stark von der Morphologie abhängen. Das Verfahren gemäß der Erfindung besitzt den Vorteil, daß die Morphologie der Blends dagegen in weiten Bereichen variiert werden kann. Durch Variation der Polymerzusammensetzung, der Zutropf- oder Eindüsungsgeschwindigkeit beim Ausfällen, des Nichtlösungsmittels, das zum Ausfällen verwendet wird, der Temperatur des Ausfällmediums, der Durchmischung des Ausfällmediums und der Konzentration der Polymere in der Lösung und im Ausfällmedium kann die Morphologie gezielt eingestellt werden. Beispielsweise kann durch Variation der Temperatur des Ausfällmediums die Größe der phasenseparierten Bereiche eingestellt und durch Variation der Durchmischung des Ausfällmediums während des Ausfällvorgangs die Form der phasenseparierten Bereiche beeinflußt werden.

Darüberhinaus kann die Kristallinität der Polymere im Blend ebenfalls gezielt eingestellt werden. So wird durch schnelles Eintropfen der Polymerlösung in das Nichtlösungsmittel und eine tiefe Temperatur beim Zutropfen ein geringer Kristallinitätsgrad erreicht, während durch langsames Eintropfen und eine hohe Temperatur beim Ausfällen ein hoher Kristallinitätsgrad realisiert wird.

Als Charakterisierungsmethoden der Blends werden Time Sweep (Time Swp.), Frequenz Sweep (Freq. Swp. nach ISO FDIS 6721-10), Schmelzviskosität nach ASTM, D 3835 und Glastemperatur nach ISO 6721, Teil 1+2, Methode b eingesetzt.

### Beispiele

### Beispiel 1

35 g PPS-Recyclat und 15 g Polyphenylenether-Recyclat, jeweils frei von Füll- und Verstärkungsstoffen, wurden in 200 g Chlornaphthalin eingebracht (Verhältnis PPS/PPO 70:30) und in einer Apparatur mit Rührer, Thermometer und Kühler auf 250°C erhitzt, wobei sich die Polymere nach einer Haltezeit von 30 Minuten bei dieser Temperatur vollständig lösten. Anschließend wurde die heiße Lösung in 3 Liter kaltes Aceton umgefällt. Die Umfällung erfolgte durch das Eintropfen der Polymerlösung, wobei das Aceton gerührt wurde. Das erhaltene faserige Produkt wurde abgesaugt und mit Aceton intensiv gewaschen. Ein nochmaliges Aufschlämmen in Aceton und wiederholtes Absaugen und Waschen beendete den Reinigungsvorgang. Die Trocknung erfolgte bei 70°C unter vermindertem Druck bis zur Gewichtskonstanz. Die Ergebnisse sind in Tabelle 1 dargestellt. Für die mechanischen Untersuchungen wurde das Material granuliert und einem Spritzgußprozeß unterzogen.

### Vergleichsbeispiel 1

Zum Vergleich wurde ein Polymerblend hergestellt, der über das Mischen von Neuware in der Schmelze durch Extrusion erzeugt wurde. Hierbei wurde Neuware in Form von kommerziell erhältlichem Polymermaterial(®Fortron 205B4 (Hersteller Ticona GmbH, Frankfurt a.M., Deutschland), ®Blendex HP820 (Hersteller GE-Plastics) gemahlen und anschließend das erhaltene Pulver entsprechend den obigen Gewichtsverhältnissen in einem Mischer homogenisiert. Die Mischung wurde danach in einen Extruder eingebracht und granuliert und spritzgegossen. Die Ergebnisse sind in Tabelle 1 aufgeführt.

Der Vergleich zeigt, daß die Werte des aus Recyclat-Material hergestellten Blends praktisch keine abweichenden Werte gegenüber Neumaterial ergeben.

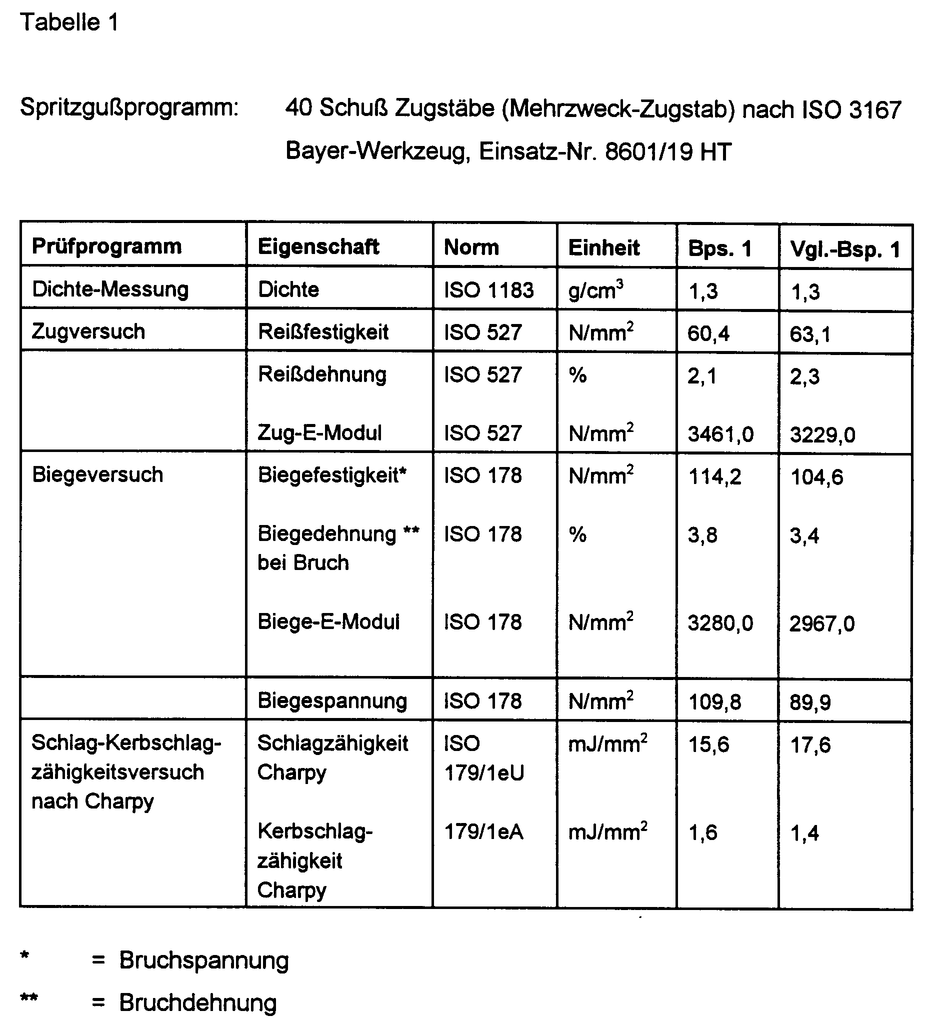

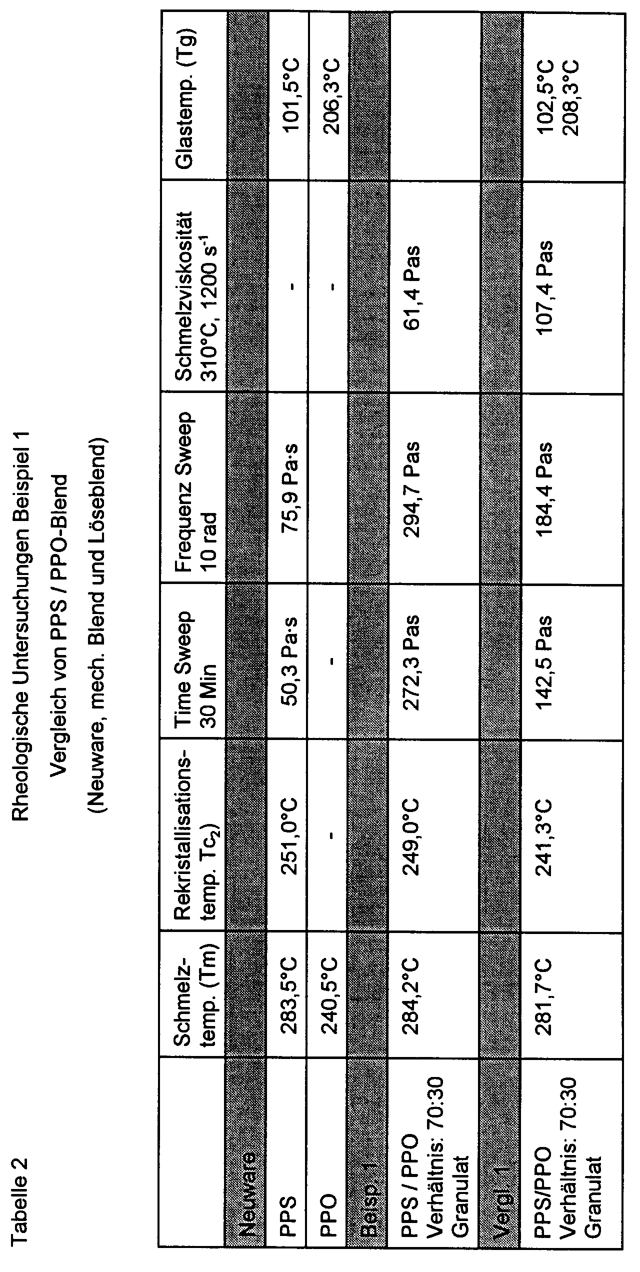

Die Auswertung der Lichtmikroskopie zeigte deutlich eine bessere homogene Verteilung des Blendpartners (Beisp. 1) im Vergleich zum mechanisch hergestellten Blend (V.-Beisp. 1). Die durchgeführte Bildanalyse ergab beim Löseblend einen durchschnittlichen Partikeldurchmesser des Blendpartners Polyphenylenether von ca. 1,8 µm mit einer engen Verteilung zwischen 0,6 und 6,8 µm. Im Gegensatz zum mechanischen Blend liegt der durchschnittliche Partikeldurchmesser von PPO bei > 25 µm.

Die Ergebnisse der mechanischen und rheologischen Untersuchungen in der Tabelle 2 zeigen, daß vergleichbare Werte erzielt werden. Das beweist, daß mit dem Löseblend-Verfahren aus Recyclatware Neuwarenqualität hergestellt werden kann. Eine eindeutige Verbesserung ergibt sich sogar in der homogenen Verteilung des Blendpartners, welche über das Verfahren gemäß der Erfindung erzielt wurde.

### Beispiel 2

5,8 kg PPS-Recyclat, das 40 Gew.-% Glasfasern als Verstärkungskomponente enthielt und 1,5 kg Polyphenylenether-Recyclat ohne Füllstoffe wurden in 20 kg Benzophenon eingebracht, so daß ein Verhältnis PPS/PPO 70:30 entsteht, und in einer Apparatur mit Rührer, Thermometer und Kondensator auf 250°C erhitzt, wobei sich die Polymere nach einer Haltezeit von 30 Minuten bei dieser Temperatur vollständig lösten. Danach wurden die nichtlöslichen Bestandteile, wie Alterungsprodukte, Verunreinigungen, Glasfasern, etc. abgetrennt. Danach wurde 3 mal mit je 2,5 l Benzophenon, das eine Temperatur von 250°C besaß, der Filterkuchen gewaschen. Anschließend wurde die heiße Lösung in 250 l Aceton eingebracht. Die Umfällung erfolgte durch Eindüsung der Polymerlösung, wobei das Aceton stark gerührt wurde. Das Produkt wurde über eine Nutsche abgesaugt und mit Aceton intensiv gewaschen. Ein nochmaliges Aufschlämmen in Aceton und wiederholtes Absaugen und Waschen beendet den Reinigungsvorgang. Die Trocknung erfolgte bei 70°C unter vermindertem Druck bis zur Gewichtskonstanz. Der erhaltene Löseblend war pulverförmig und zeichnete sich durch seine geringe Schüttdichte von 0,35 g/cm³ aus. Das Produkt wurde anschließend mit Glasfaser (Neuware) compoundiert.

### Vergleichsbeispiel 2

Auch hier wurde zum Vergleich ein mechanischer Blend hergestellt, indem Recyclatware der Polymere entsprechend dem obigen Mischungsverhältnis PPS/PPO von 70:30, wobei das PPS mit 40 % Glasfaser verstärkt war, granuliert wurden.

Das Ergebnis der mechanischen Untersuchungen ergab einen um 5 % höheren Meßwert für den Zug-E-Modul und eine um 10 % höheren Meßwert für die Biegefestigkeit des geprüften Löseblends im Vergleich zum hergestellten mechanischen Blend.

### Beispiel 3

700 g eines Recyclates mit der Zusammensetzung 300 g Polyphenylensulfid (PPS), 100 g Polyethersulfon (PES), 50 g Liquid-Chrystal-Polymer (LCP) und 200 g Glasfasern wurde in 2,5 kg Benzophenon eingebracht und auf 250°C erhitzt. Die weitere Behandlung erfolgte wie in Beispiel 2 beschrieben. Die Untersuchung des erhaltenen Materials ergab, daß ein zweiphasiger Polymerblend, bestehend aus Polyethersulfon und Polyphenylensulfid, vorlag. Der Glasfasergehalt betrug < 1 Gew.-%. Die analytische Untersuchung des Filterkuchens zeigte folgende Zusammensetzung in Masseprozent.

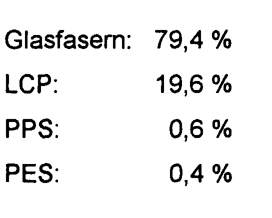

Dies zeigt, daß mit diesem Verfahren auch die Möglichkeit besteht, bestimmte Hochleistungspolymere, die unlöslich in den verwendeten Lösemitteln sind, zu separieren bzw. Polymerblends gezielt herzustellen.

### Beispiel 4

Der aus Beispiel 1 umgefällte Polymerblend (Löseblend) wurde gemäß Beispiel 1 erneut behandelt. Die Eigenschaften des Produktes unterschieden sich nicht von dem Produkt aus Beispiel 1 (Einmal-Behandlung). Eine Verschlechterung der Eigenschaften ist somit nicht eingetreten.

### Beispiel 5

Ein Recyclat (5 kg), das PPS und PES im Verhältnis 50:50 enthielt, wurde wie in Beispiel 2 mit 20 kg Benzophenon behandelt. Das erhaltene Blend-Produkt wurde zu Zugstäben geformt. Zum Vergleich wurden entsprechend Zugstäbe aus Neuware wie im Vergleichsbeispiel 1 beschrieben hergestellt. Die Eigenschaften beider Versuche finden sich in Tabelle 3.

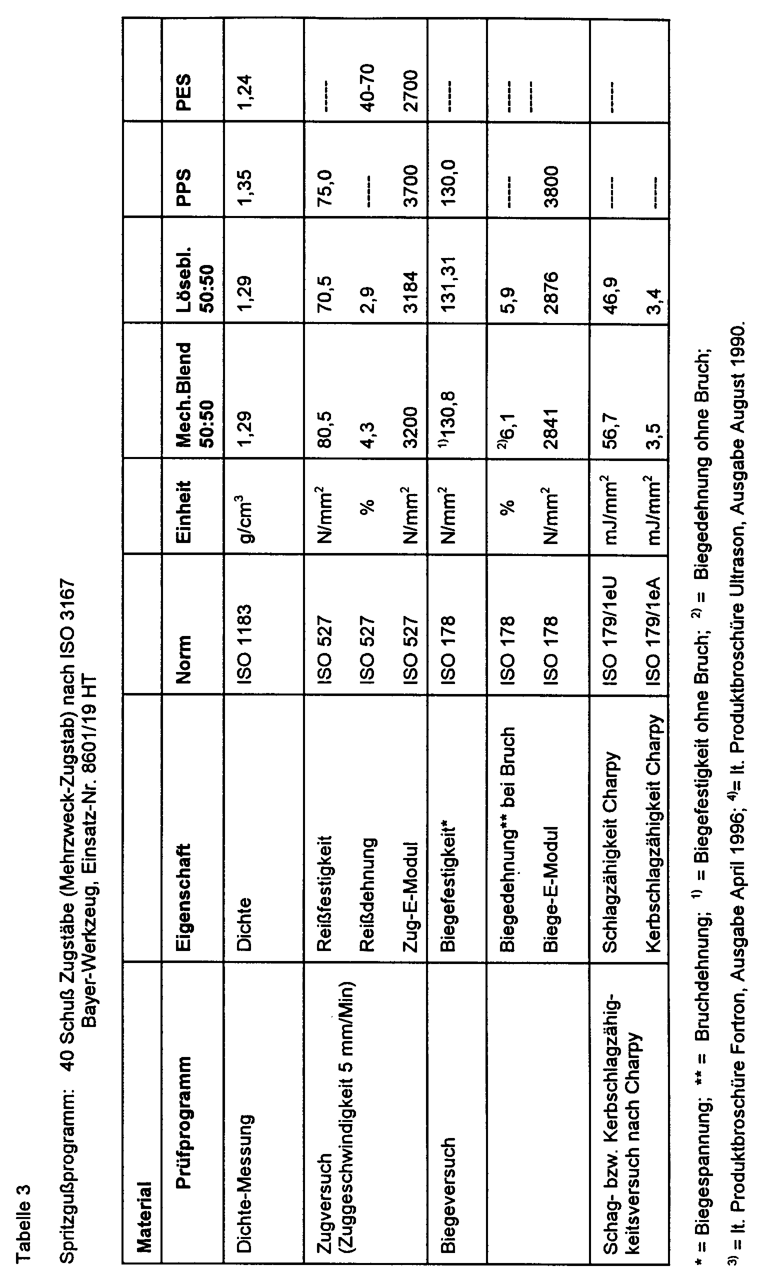

## Patentansprüche

1. Verfahren zur Herstellung von Blends aus Hochleistungspolymeren, dadurch gekennzeichnet, daß mindestens zwei sortenreine Polymere mit einem Lösungsmittel oder einem Lösungsmittelgemisch, in dem die eingesetzten Polymere löslich sind, behandelt werden, daß die Polymere dabei gelöst und anschließend in einem flüssigen Medium ausgefällt werden und daß als polymere Bestandteile jeweils Recyclat eingesetzt wird.

2. Verfahren nach Anspruch 1, dadurch gekennzeichnet, daß die als Recyclat eingesetzten Polymere Polyarylensulfid, Polyetherketon, Polyetheretherketon, Polyetherimid, Polyphenylenoxid, Polycarbonat, Cycloolefincopolymer und Polyethersulfon sind.

3. Verfahren nach Anspruch 1 oder 2, dadurch gekennzeichnet, daß ein Polymer Polyarylensulfid ist.

4. Verfahren nach Anspruch 1 bis 3, dadurch gekennzeichnet, daß das Recyclat in Form von Pulver, Granulat, Formteilen und Verformungsabfall eingesetzt wird.

5. Verfahren nach einem oder mehreren der Ansprüche 1 bis 4, dadurch gekennzeichnet, daß das Lösungsmittel eine ein- oder mehrkernige organische Verbindung mit 6 bis 25 C-Atomen ist, die unsubstituiert oder mit Halogen, vorzugsweise Chlor und Brom, Alkoxygruppen mit 1 bis 4 C-Atomen im Alkylrest und Arylgruppen substituiert ist.

6. Verfahren nach Anspruch 5, dadurch gekennzeichnet, daß als Lösungsmittel Chlorbenzol, 1-Chlor- und 1 -Bromnaphthalin, Benzophenon oder N-Methylpyrrolidon, einzeln oder im Gemisch, eingesetzt wird.

7. Verfahren nach einem oder mehreren der Ansprüche 1 bis 6, dadurch gekennzeichnet, daß das Polymer-Material bei einer Temperatur von 150°C bis 360°C, vorzugsweise bei 180°C bis 300°C gelöst wird.

8. Verfahren nach Anspruch 7, dadurch gekennzeichnet, daß das Material unter erhöhtem Druck gelöst wird.

9. Verfahren nach einem oder mehreren der Ansprüche 1 bis 8, dadurch gekennzeichnet, daß das flüssige Medium Aceton, Ethanol, Isopropanol, Tetrahydrofuran oder Toluol ist.

10. Verfahren nach einem oder mehreren der Ansprüche 1 bis 9, dadurch gekennzeichnet, daß das flüssige Medium im Verhältnis von 1:1 bis 1:100, vorzugsweise von 1:10 bis 1:15 vorgelegt wird.

11. Verfahren nach einem oder mehreren der Ansprüche 1 bis 10, dadurch gekennzeichnet, daß das gelöste Material von nicht löslichen Feststoffen vor der Ausfällung befreit wird.

12. Verfahren nach einem oder mehreren der Ansprüche 1 bis 11, dadurch gekennzeichnet, daß ausgefällte Polymerblends mit verschiedenen Geometrien erhalten werden.

13. Verfahren nach einem oder mehreren der Ansprüche 1 bis 12, dadurch gekennzeichnet, daß ausgefällte Polymerblends mit verschiedenen Morphologien erhalten werden.

14. Verwendung des nach einem oder mehreren der Ansprüche 1 bis 13 wiedergewonnenen Polymer-Blends als technischer Kunststoff zur Herstellung von Formteilen.
